# EUROPÄISCHE PATENTANMELDUNG

(11) **EP 3 789 222 A1**
(43) Veröffentlichungstag der Anmeldung: **10.03.2021**
(21) Anmeldenummer: 20187403.9
(22) Anmeldetag: 23.07.2020
(51) Int. Cl.: B60J 5/06, B61D 19/00, B60J 5/04

(54) **KLAPPENEINRICHTUNG FÜR EIN KRAFTFAHRZEUG, INSBESONDERE FÜR EINEN OMNIBUS**

(30) Priorität: 06.09.2019 DE 102019123992
(71) Anmelder: apt Sedant Holding GmbH, 40789 Monheim am Rhein (DE)
(72) Erfinder: Krogmann, Dirk, 40789 Monheim am Rhein (DE); Röder, Jens, 40789 Monheim am Rhein (DE)
(74) Vertreter: Hafner & Kohl PartmbB

(57) **Zusammenfassung**

Klappeneinrichtung (1) für ein Kraftfahrzeug, insbesondere für einen Omnibus, wobei die Klappeneinrichtung (1) zum Öffnen und Schließen wenigstens einer eine Zugangsmöglichkeit in einen fahrzeugkarosserieseitigen Innenraum (3), insbesondere in einen fahrzeugkarosserieseitigen Stau- oder Funktionsraum, eingerichtet ist, umfassend:
- ein Klappenbauteil (5), welches entlang einer durch eine erste Bewegungsachse (A1) definierten ersten Bewegungsbahn (B1) sowie entlang einer durch eine von der ersten Bewegungsachse (A1) verschiedene zweite Bewegungsachse (A2) definierten zweiten Bewegungsbahn (B2) bewegbar gelagert ist,
- eine dem Klappenbauteil (5) zugeordnete Bewegungseinrichtung welche (6) zur Bewegung des Klappenbauteils (5) entlang der ersten Bewegungsbahn (B1) und entlang der zweiten Bewegungsbahn (B2) eingerichtet ist.

## Beschreibung

Die Erfindung betrifft eine Klappeneinrichtung für ein Kraftfahrzeug, insbesondere für einen Omnibus, wobei die Klappeneinrichtung zum Öffnen und Schließen wenigstens einer eine Zugangsmöglichkeit in einen fahrzeugkarosserieseitigen Innenraum, insbesondere in einen fahrzeugkarosserieseitigen Stau- oder Funktionsraum, eingerichtet ist.

Entsprechende Klappeneinrichtungen für Kraftfahrzeuge, d. h. insbesondere für Omnibusse, sind aus dem Stand der Technik dem Grunde nach bekannt. Hauptaufgabe entsprechender Klappeneinrichtungen ist das Öffnen und Schließen einer eine Zugangsmöglichkeit in einen fahrzeugkarosserieseitigen Innenraum, d. h. insbesondere in einen fahrzeugkarosserieseitigen Stau- oder Funktionsraum, bildenden fahrzeugkarosserieseitigen Öffnung.

Entsprechend umfassen Klappeneinrichtungen typischerweise ein Klappenbauteil zum Öffnen und Schließen einer eine Zugangsmöglichkeit in einen fahrzeugkarosserieseitigen Innenraum bildenden fahrzeugkarosserieseitigen Öffnung. Ein entsprechendes Klappenbauteil ist sonach in eine eine Zugangsmöglichkeit in einen entsprechenden fahrzeugkarosserieseitigen Innenraum, d. h. insbesondere in einen entsprechend fahrzeugkarosserieseitigen Stau- oder Funktionsraum, freigebende Stellung (Offenstellung) und in eine keine Zugangsmöglichkeit in einen entsprechenden fahrzeugkarosserieseitigen Innenraum freigebende Stellung (Schließstellung) bewegbar.

Bis dato ist ein entsprechendes Klappenbauteil hierfür typischerweise schwenkbar an einer Fahrzeugkarosserie gelagert. Die Überführung eines entsprechenden Klappenbauteils von einer entsprechenden Offen- in eine entsprechende Schließstellung, und umgekehrt, erfolgt bis dato sonach typischerweise über eine Schwenkbewegung des Klappenbauteils relativ zu der Fahrzeugkarosserie.

Die Ausführung der Schwenkbewegung des Klappenbauteils benötigt vergleichsweise viel Platz, sodass auf Objekte, d. h. insbesondere andere Fahrzeuge, bauliche Gegebenheiten und nicht zuletzt auf Passanten, im Umfeld um das Klappenbauteil geachtet werden muss. Gleichermaßen beansprucht ein entsprechend schwenkbar gelagertes Klappenbauteil in der Offenstellung vergleichsweise viel Platz, da es in einer winklig relativ zu der Fahrzeugkarosserie verschwenkten Lage ausgerichtet ist; entsprechend ist auch in der Offenstellung des Klappenbauteils auf Objekte im Umfeld zu achten.

Insgesamt besteht sonach, insbesondere im Hinblick auf den bei Überführung eines Klappenbauteils von einer entsprechenden Offen- in eine entsprechende Schließstellung beanspruchten Platz, ein Bedarf nach einer verbesserten Klappeneinrichtung für ein Kraftfahrzeug.

Die Aufgabe wird durch eine Klappeneinrichtung für ein Kraftfahrzeug gemäß Anspruch 1 gelöst. Die hierzu abhängigen Ansprüche betreffen mögliche Ausführungsformen der Klappeneinrichtung.

Ein erster Aspekt der hierin beschriebenen Erfindung betrifft eine Klappeneinrichtung für ein Kraftfahrzeug. Bei einem entsprechenden Kraftfahrzeug handelt es sich typischerweise um einen Auto- bzw. Omnibus; jedoch sind grundsätzlich auch andere Kraftfahrzeugbauarten angesprochen.

Die Klappeneinrichtung ist im Allgemeinen zum Öffnen und Schließen wenigstens einer eine Zugangsmöglichkeit in einen fahrzeugkarosserieseitigen Innenraum, d. h. insbesondere in einen fahrzeugkarosserieseitigen Stau- oder Funktionsraum, eines mit der Klappeneinrichtung ausgestatteten Kraftfahrzeugs bildenden fahrzeugkarosserieseitigen Öffnung eingerichtet. Bei einem entsprechenden fahrzeugkarosserieseitigen Innenraum handelt es typischerweise sich um einen über eine entsprechende fahrzeugkarosserieseitige Öffnung von außen, d. h. von außerhalb der Fahrzeugkarosserie, zugänglichen fahrzeugkarosserieseitigen Raum.
Bei einem entsprechenden Innenraum handelt es sich, wie erwähnt, insbesondere um einen Stau- oder Funktionsraum; ein entsprechender Innenraum kann sonach im Sinne eines Stau- bzw. Gepäckraums zum Verstauen von Objekten, d. h. z. B. Gepäck, oder im Sinne eines z. B. im Rahmen von Service- oder Reparaturarbeiten zugänglich zu machenden Funktionsraums zur Aufnahme von Funktionseinheiten eines mit der Klappeneinrichtung ausgestatteten Kraftfahrzeugs, wie z. B. zur Aufnahme von Antriebsmotoren, Energiespeichern, Betriebsmittel- oder Versorgungsspeichern, etc., dienen. Bei einem entsprechenden Innenraum handelt es sich daher typischerweise nicht um einen Fahrgastinnenraum; eine entsprechend fahrzeugkarosserieseitige Öffnung dient sonach typischerweise nicht als Zugangsmöglichkeit für Passagiere in das Kraftfahrzeug.

Ein entsprechender Innenraum kann z. B. im Bereich des Hecks einer Seite und/oder der Fronteines mit der Klappeneinrichtung ausgestatteten Kraftfahrzeugs angeordnet oder ausgebildet sein.

Zum Öffnen und Schließen einer entsprechenden fahrzeugkarosserieseitigen Öffnung umfasst die Klappeneinrichtung ein Klappenbauteil. Das Klappenbauteil ist sonach im Allgemeinen in eine Stellung (Offenstellung), in welcher es eine eine Zugangsmöglichkeit in eine einen entsprechenden fahrzeugkarosserieseitigen Innenraum bzw. Stau- oder Funktionsraum bildende bzw. begrenzende fahrzeugkarosserieseitige Öffnung freigibt, und in eine Stellung (Schließstellung), in welcher es keine Zugangsmöglichkeit in eine einen entsprechenden fahrzeugkarosserieseitigen Innenraum bzw. Stau- oder Funktionsraum bildende bzw. begrenzende fahrzeugkarosserieseitige Öffnung freigibt, bewegbar gelagert.

Die bewegbare Lagerung des Klappenbauteils beinhaltet allerdings keine verschwenkbare Lagerung wie sie in diversen aus dem Stand der Technik bekannten Lösungen vorgesehen ist. Das Klappenbauteil ist sonach zur Überführung von der Offen- in die Schließstellung, und umgekehrt, nicht verschwenkbar gelagert. Vielmehr ist das Klappenbauteil entlang einer durch eine erste Bewegungsachse definierten ersten Bewegungsbahn sowie entlang einer durch eine von der ersten Bewegungsachse verschiedene zweite Bewegungsachse definierten zweiten Bewegungsbahn bewegbar gelagert. Durch die Lagerung des Klappenbauteils in entsprechenden ersten und zweiten Bewegungsbahnen - wie sich im Weiteren ergibt, handelt es sich hierbei jeweils um durch Translations- bzw. Linearachsen definierte Translations- bzw. Linearbahnen - kann ein aus dem Stand der Technik bekanntes Verschwenken des Klappenbauteils zur Überführung dieses von der Offen- in die Schließstellung, und umgekehrt, vermieden werden.

Die Überführung des Klappenbauteils von der Offen- in die Schließstellung, und umgekehrt, kann vielmehr über eine oder mehrere Translations- bzw. Linearbewegungen des Klappenbauteils entlang einer entsprechenden Bewegungsbahn realisiert werden, was im Vergleich deutlich weniger Platz beansprucht. Insbesondere können Bewegungen zur Überführung des Klappenbauteils von der Offen- in die Schließstellung, und umgekehrt, nahe an einer Fahrzeugkarosserie, d. h. insbesondere nahe an einer, insbesondere seitlichen, Außenwandung einer Fahrzeugkarosserie, vollzogen werden, sodass das Klappenbauteil wieder in der Offen- noch in der Schließstellung noch im Zuge einer Überführung von der Offen- in die Schließstellung viel Platz beansprucht. Konkret kann das Klappenbauteil zur Überführung von der Offen- in die Schließstellung, und umgekehrt, in einem (im Wesentlichen) konstanten Abstand, d. h. insbesondere (im Wesentlichen) parallel, relativ zu einer, insbesondere seitlichen, Außenwandung einer Fahrzeugkarosserie bewegt werden. Der Abstand zwischen dem Klappenbauteil und der, insbesondere seitlichen, Außenwandung einer Fahrzeugkarosserie während der Überführung des Klappenbauteils von der Offen- in die Schließstellung, oder umgekehrt, kann z. B. in einem Bereich zwischen 1 und 30 cm, insbesondere in einem Bereich zwischen 1 und 20 cm, bevorzugt in einem Bereich zwischen 1 und 15 cm, liegen.

Das Klappenbauteil kann aufgrund seiner Bewegung in entsprechenden Bewegungsbahnen auch als Schiebeklappe bezeichnet oder erachtet werden.

Die erste Bewegungsbahn kann bezogen auf einen ordnungsgemäß in einer Fahrzeugkarosserie verbauten Zustand der Klappeneinrichtung als eine Bewegungsbahn quer zu einer, insbesondere seitlichen, Außenwandung der Fahrzeugkarosserie erachtet werden. Die zweite Bewegungsbahn kann bezogen auf einen ordnungsgemäß in einer Fahrzeugkarosserie verbauten Zustand der Klappeneinrichtung als eine Bewegungsbahn (im Wesentlichen) parallel zu einer, insbesondere seitlichen, Außenwandung der Fahrzeugkarosserie erachtet werden. Die erste Bewegungsachse bzw. -bahn kann sonach im Allgemeinen als eine in einer horizontalen Ebene liegende Bewegungsachse bzw. -bahn und somit als (im Wesentlichen) horizontale Bewegungsbahn erachtet werden. Die zweite Bewegungsachse bzw. -bahn kann sonach im Allgemeinen als eine in einer vertikalen Ebene liegende Bewegungsachse bzw. -bahn und somit als (im Wesentlichen) vertikale Bewegungsbahn erachtet werden.

Jedenfalls im Zusammenhang mit der ersten Bewegungsbahn gilt, dass diese eine überlagerte Bewegung des Klappenbauteils in wenigstens zwei unterschiedlichen Bewegungsbahnkomponente, d. h. z. B. einer horizontalen und einer vertikalen Bewegungsbahnkomponente, beschreiben kann. Die erste Bewegungsbahn kann sonach eine überlagerte Bewegung des Klappenbauteils in wenigstens zwei unterschiedlichen Bewegungsbahnkomponente, d. h. z. B. einer horizontalen und einer vertikalen Bewegungsbahnkomponente, sein. Hieraus kann ein (im Vergleich geringfügiger) Hub des Klappenbauteils, insbesondere in Richtung eines Untergrunds, bei einer Bewegung des Klappenbauteils entlang der ersten Bewegungsbahn resultieren. Ein entsprechender Hub kann z. B. zweckmäßig sein, um ungewünschte Kontakte des Klappenbauteils mit der Fahrzeugkarosserie eines mit der Klappeneinrichtung ausgestatteten Kraftfahrzeugs bei Bewegungen des Klappenbauteils entlang der ersten Bewegungsbahn zu vermeiden.

Im Zusammenhang mit der Bewegung des Klappenbauteils in der zweiten Bewegungsbahn gilt, dass die Ausrichtung des Klappenbauteils im Zuge einer Bewegung des Klappenbauteils entlang der zweiten Bewegungsbahn grundsätzlich unabhängig von der konkreten Ausführung der zweiten Bewegungsbahn ist. Das Klappenbauteil kann - insbesondere bezogen auf eine Haupterstreckungsebene des Klappenbauteils - im Zuge einer Bewegung entlang der zweiten Bewegungsbahn sonach (im Wesentlichen) parallel zu einer, insbesondere seitlichen, Außenwandung der Fahrzeugkarosserie ausgerichtet sein. Denkbar ist jedoch auch eine nicht-parallele Ausrichtung des Klappenbauteils, d. h. z. B. eine winklig (geringfügig) geneigte Ausrichtung des Klappenbauteils relativ zu einer, insbesondere seitlichen, Außenwandung der Fahrzeugkarosserie.

Die Klappeneinrichtung umfasst neben dem Klappenbauteil auch eine dem Klappenbauteil zugeordnete Bewegungseinrichtung. Die Bewegungseinrichtung ist zur Bewegung des Klappenbauteils entlang der ersten Bewegungsbahn und entlang der zweiten Bewegungsbahn eingerichtet. Die Bewegungseinrichtung ist somit auch zur Überführung des Klappenbauteils von der Offen- in die Schließstellung, und umgekehrt, eingerichtet, als diese eine Bewegung des Klappenbauteils in beiden Bewegungsbahnen erfordert.

Die Bewegungseinrichtung kann eine oder mehrere dieser funktionell zuordenbare bzw. zugeordnete Einrichtungen umfassen, welche der Umsetzung von Bewegungen des Klappenbauteils entlang der ersten Bewegungsbahn und/oder entlang der zweiten Bewegungsbahn und somit auch zur Umsetzung von Bewegungen des Klappenbauteils zur Überführung dieses von der Offen- in die Schließstellung, und umgekehrt, dienen. Wie sich im Weiteren ergibt, handelt es sich hierbei insbesondere um eine oder mehrere Antriebseinrichtungen sowie eine oder mehrere Lagerungseinrichtungen.

Wie angedeutet, kann es sich bei den die jeweiligen Bewegungsbahnen definierenden Bewegungsachsen um Translationsachsen, d. h. insbesondere um Linearachsen, handeln. Die die erste Bewegungsbahn definierende erste Bewegungsachse kann sonach eine Translationsachse, d. h. insbesondere eine Linearachse, sein. Gleichermaßen kann die die zweite Bewegungsbahn definierende zweite Bewegungsachse eine Translationsachse, d. h. insbesondere eine Linearachse, sein.

Die Bewegung des Klappenbauteils entlang der ersten Bewegungsbahn kann - insbesondere bezogen auf einen ordnungsgemäß in einer Fahrzeugkarosserie verbauten Zustand der Klappeneinrichtung - eine Ausstellbewegung des Klappenbauteils sein. Die erste Bewegungsbahn kann sonach eine Ausstellbewegung des Klappenbauteils definieren. Eine entsprechende Ausstellbewegung kann eine Teilbewegung einer Gesamtbewegung zur Überführung des Klappenbauteils von der Offen- in die Schließstellung, und umgekehrt, darstellen.

Die erste Bewegungsbahn kann eine erste und eine zweite Stellung des Klappenbauteils umfassen respektive durch eine erste Stellung und eine zweite Stellung des Klappenbauteils definiert sein. Die erste Stellung des Klappenbauteils in der ersten Bewegungsbahn kann als eigentliche Schließstellung des Klappenbauteils erachtet werden. Die zweite Stellung des Klappenbauteils in der ersten Bewegungsbahn kann als eine Zwischenstellung des Klappenbauteils zwischen der Offenstellung und der Schließstellung erachtet werden.

Die erste Stellung des Klappenbauteils in der ersten Bewegungsbahn kann in einem ordnungsgemäß in einer Fahrzeugkarosserie eines mit der Klappeneinrichtung ausgestatteten Kraftfahrzeugs verbauten Zustand der Klappeneinrichtung einer in die Fahrzeugkarosserie, d. h. insbesondere in eine eine Zugangsmöglichkeit in einen fahrzeugkarosserieseitigen Innenraum bildende fahrzeugkarosserieseitige Öffnung, eingefahrenen Stellung des Klappenbauteils entsprechen respektive mit einer solchen korreliert sein. Die zweite Stellung des Klappenbauteils in der ersten Bewegungsbahn kann in einem ordnungsgemäß in einer Fahrzeugkarosserie eines mit der Klappeneinrichtung ausgestatteten Kraftfahrzeugs verbauten Zustand der Klappeneinrichtung einer aus der Fahrzeugkarosserie, d. h. insbesondere aus einer eine Zugangsmöglichkeit in den fahrzeugkarosserieseitigen Innenraum bildenden fahrzeugkarosserieseitigen Öffnung, ausgefahrenen Stellung des Klappenbauteils entsprechen respektive mit einer solchen korreliert sein.

Das Klappenbauteil kann in der ersten Stellung sonach innerhalb einer eine Zugangsmöglichkeit in einen fahrzeugkarosserieseitigen Innenraum bildenden fahrzeugkarosserieseitigen Öffnung respektive innerhalb einer das Klappenbauteil in der ersten Stellung aufnehmenden fahrzeugkarosserieseitigen Öffnung anordenbar oder angeordnet sein. Das Klappenbauteil kann in der ersten Stellung bündig mit einer die fahrzeugkarosserieseitige Öffnung begrenzenden, insbesondere seitlichen, Außenwandung der Fahrzeugkarosserie angeordnet sein. In der zweiten Stellung kann das Klappenbauteil außerhalb der eine Zugangsmöglichkeit in einen fahrzeugkarosserieseitigen Innenraum respektive einer das Klappenbauteil in der ersten Stellung aufnehmenden fahrzeugkarosserieseitigen Öffnung angeordnet sein. Das Klappenbauteil kann in der zweiten Stellung sonach beabstandet zu einer die fahrzeugkarosserieseitige Öffnung begrenzenden, insbesondere seitlichen, Außenwandung der Fahrzeugkarosserie angeordnet sein.

Wie sich im Weiteren ergibt, korreliert die zweite Stellung des Klappenbauteils in der ersten Bewegungsbahn typischerweise mit einer ersten Stellung des Klappenbauteils in der zweiten Bewegungsbahn.

Die Bewegung des Klappenbauteils entlang der zweiten Bewegungsbahn kann - insbesondere bezogen auf einen ordnungsgemäß in einer Fahrzeugkarosserie eines mit der Klappeneinrichtung ausgestatteten Kraftfahrzeugs verbauten Zustand der Klappeneinrichtung - eine Hubbewegung, d. h. insbesondere eine horizontale oder vertikale Hubbewegung, des Klappenbauteils sein. Die zweite Bewegungsbahn kann sonach eine Hubbewegung des Klappenbauteils definieren. Eine entsprechende Hubbewegung kann ebenso eine Teilbewegung einer Gesamtbewegung zur Überführung des Klappenbauteils von der Offen- in die Schließstellung, und umgekehrt, darstellen.

Die zweite Bewegungsbahn kann eine erste und eine zweite Stellung des Klappenbauteils umfassen respektive durch eine erste Stellung und eine zweite Stellung des Klappenbauteils definiert sein. Die erste Stellung des Klappenbauteils in der zweiten Bewegungsbahn kann als eine Zwischenstellung des Klappenbauteils zwischen der Offenstellung und der Schließstellung des Klappenbauteils erachtet werden. Die zweite Stellung des Klappenbauteils in der zweiten Bewegungsbahn kann als eigentliche Offenstellung des Klappenbauteils erachtet werden.

In der ersten Stellung des Klappenbauteils in der zweiten Bewegungsbahn kann das Klappenbauteil in einem ordnungsgemäß in einer Fahrzeugkarosserie eines mit der Klappeneinrichtung ausgestatteten Kraftfahrzeugs mit einer das Klappenbauteil in der oder einer ersten Stellung der ersten Bewegungsbahn aufnehmenden fahrzeugkarosserieseitigen Öffnung fluchten. Das Klappenbauteil kann in der ersten Stellung der zweiten Bewegungsbahn sonach derart relativ zu einer entsprechenden fahrzeugkarosserieseitigen Öffnung angeordnet sein, dass es mit der fahrzeugkarosserieseitigen Öffnung fluchtet; das Klappenbauteil kann in der ersten Stellung versetzt zu einer entsprechenden fahrzeugkarosserieseitigen Öffnung angeordnet sein, wobei es die fahrzeugkarosserieseitige Öffnung überdeckt und so eine Zugangsmöglichkeit in einen fahrzeugkarosserieseitigen Innenraum nicht freigibt.

In der zweiten Stellung des Klappenbauteils in der zweiten Bewegungsbahn kann das Klappenbauteil in einem ordnungsgemäß in einer Fahrzeugkarosserie eines mit der Klappeneinrichtung ausgestatteten Kraftfahrzeugs nicht mit einer das Klappenbauteil in der oder einer ersten Stellung der ersten Bewegungsbahn aufnehmenden fahrzeugkarosserieseitigen Öffnung fluchten. Das Klappenbauteil kann in der zweiten Stellung der zweiten Bewegungsbahn sonach derart relativ zu einer entsprechenden fahrzeugkarosserieseitigen Öffnung angeordnet sein, dass es nicht mit der fahrzeugkarosserieseitigen Öffnung fluchtet; das Klappenbauteil ist in der zweiten Stellung der zweiten Bewegungsbahn sonach typischerweise versetzt zu einer entsprechenden fahrzeugkarosserieseitigen Öffnung angeordnet, wobei es die fahrzeugkarosserieseitige Öffnung nicht überdeckt und so eine Zugangsmöglichkeit in einen fahrzeugkarosserieseitigen Innenraum freigibt.

Wesentlich ist, dass das Klappenbauteil jedenfalls bei einer Bewegung entlang der zweiten Bewegungsbahn, d. h. insbesondere bei einer Bewegung von der ersten Stellung der zweiten Bewegungsbahn in die zweite Stellung der zweiten Bewegungsbahn, und umgekehrt, keine Schwenkbewegung vollzieht.

Wie erwähnt, kann die Bewegungseinrichtung eine oder mehrere funktionelle Einrichtungen umfassen, welche der Umsetzung von Bewegungen des Klappenbauteils entlang der ersten Bewegungsbahn und/oder entlang der zweiten Bewegungsbahn und somit auch zur Umsetzung von Bewegungen des Klappenbauteils zur Überführung dieses von der Offen- in die Schließstellung, und umgekehrt, dienen.

Die Bewegungseinrichtung kann z. B. eine Antriebseinrichtung umfassen. Die Antriebseinrichtung kann eine Antriebseinheit umfassen, welche eingerichtet ist, eine das Klappenbauteil in eine Bewegung entlang der ersten Bewegungsbahn und entlang der zweiten Bewegungsbahn versetzende Antriebskraft oder ein entsprechendes Antriebsmoment zu erzeugen. Mithin ist es denkbar, dass die für Bewegungen des Klappenbauteils entlang der ersten und der zweiten Bewegungsbahn erforderliche Antriebskraft oder ein entsprechendes Antriebsmoment über eine (einzige) Antriebseinheit erzeugbar respektive bereitgestellt ist. Alternativ ist es denkbar, dass die Antriebseinrichtung eine erste Antriebseinrichtung umfasst, welche eingerichtet ist, eine das Klappenbauteil in eine Bewegung entlang der ersten Bewegungsbahn versetzende Antriebskraft oder ein entsprechendes Antriebsmoment zu erzeugen, und eine zweite Antriebseinrichtung umfasst, welche eingerichtet ist, eine das Klappenbauteil in eine Bewegung entlang der zweiten Bewegungsbahn versetzende Antriebskraft oder ein entsprechendes Antriebsmoment zu erzeugen. Mithin ist es denkbar, dass die für Bewegungen des Klappenbauteils entlang der ersten und der zweiten Bewegungsbahn erforderliche Antriebskraft oder ein entsprechendes Antriebsmoment über mehrere Antriebseinheiten erzeugbar respektive bereitgestellt ist. Eine entsprechende Antriebseinheit kann in allen Ausführungsformen als (elektro)motorische Antriebseinheit ausgebildet sein. Alternativ oder ergänzend sind auch anders konfigurierte Antriebseinheiten, wie z. B. hydraulische oder pneumatische Antriebseinheiten, denkbar.

Die Antriebseinrichtung oder wenigstens eine der Antriebseinrichtung zugehörige Antriebseinheit kann (direkt) an dem Klappenbauteil angeordnet oder ausgebildet sein. Die Antriebseinrichtung oder wenigstens eine der Antriebseinrichtung zugehörige Antriebseinheit kann sonach (direkt) in das Klappenbauteil integriert sein. Das Klappenbauteil kann in dieser Ausführungsform eine hochintegriert ausgeführte Baugruppe darstellen.

Alternativ kann die Antriebseinrichtung oder wenigstens eine der Antriebseinrichtung zugehörige Antriebseinheit in einem ordnungsgemäß in einer Fahrzeugkarosserie eines mit der Klappeneinrichtung ausgestatteten Kraftfahrzeugs verbauten Zustand der Klappeneinrichtung an der Fahrzeugkarosserie angeordnet oder ausgebildet sein. Die Antriebseinrichtung oder wenigstens eine der Antriebseinrichtung zugehörige Antriebseinheit kann sonach in eine Fahrzeugkarosserie integriert sein. Das Klappenbauteil kann in dieser Ausführungsform sonach eine vergleichsweise einfach ausgeführte Baugruppe darstellen.

Selbstverständlich sind auch Mischformen denkbar; mit kann wenigstens eine Antriebseinheit an dem Klappenbauteil angeordnet oder ausgebildet und wenigstens eine weitere Antriebseinheit an einer Fahrzeugkarosserie angeordnet oder ausgebildet sein. In dieser Variante ist es insbesondere denkbar, dass eine fahrzeugkarosserieseitige angeordnete oder ausgebildete Antriebseinheit zur Erzeugung einer das Klappenbauteil in eine Bewegung entlang der ersten Bewegungsbahn versetzenden Antriebskraft oder eines entsprechenden Antriebsmoments eingerichtet ist, und eine klappenbauteilseitig angeordnete oder ausgebildete Antriebseinheit zur Erzeugung einer das Klappenbauteil in eine Bewegung entlang der zweiten Bewegungsbahn versetzenden Antriebskraft oder eines entsprechenden Antriebsmoments eingerichtet ist. Prinzipiell ist eine umgekehrte Konfiguration ebenso denkbar.

Die Bewegungseinrichtung kann weiterhin eine Lagerungseinrichtung zur bewegbaren Lagerung des Klappenbauteils umfassen. Die Lagerungseinrichtung kann eine erste Lagerungseinheit und eine zweite Lagerungseinheit umfassen. Die erste Lagerungseinheit ist zur Lagerung der zweiten Lagerungseinheit eingerichtet und lagert die zweite Lagerungseinheit entsprechend. Die erste Lagerungseinheit ist insbesondere eingerichtet, die zweite Lagerungseinheit zwischen einer ersten Lagerungsstellung und einer zweiten Lagerungsstellung bewegbar zu lagern. Dabei korreliert die erste Lagerungsstellung typischerweise mit der ersten Stellung des Klappenbauteils in der ersten Bewegungsbahn und die zweite Lagerungsstellung korreliert typischerweise mit der zweiten Stellung des Klappenbauteils in der ersten Bewegungsbahn.

Die erste Lagerungseinheit ist insbesondere eingerichtet, die zweite Lagerungseinheit in einem Schwenkbewegungs- oder in einem Translationsbewegungsfreiheitsgrad zu lagern. Die zweite Lagerungseinheit kann vermittels der ersten Lagerungseinheit sonach in einem Schwenkbewegungs- oder in einem Translationsbewegungsfreiheitsgrad bewegbar gelagert sein. Bewegungen der zweiten Lagerungseinheit in dem Schwenkbewegungs- bzw. Translationsbewegungsfreiheitsgrad resultieren typischerweise in Bewegungen des Klappenbauteils entlang der ersten Bewegungsbahn.

Die erste Lagerungseinheit kann durch wenigstens eine Führungseinheit gebildet sein oder wenigstens eine solche umfassen. Die wenigstens eine Führungseinheit kann als Schwenk- oder Translationsführung ausgebildet sein. Die wenigstens eine Führungseinheit kann sonach ein oder mehrere unter Ausbildung einer Schwenk- oder Translationsführung zusammenwirkende Führungselemente, wie z. B. Schwenkelemente, Schiebeelemente oder profilartige bzw. -förmige Führungsstreben, umfassen. Jeweilige zusammenwirkende Führungselemente der wenigstens einen Führungseinheit können an der Fahrzeugkarossiere, d. h. fahrzeugkarosserieseitig, und an der zweiten Lagerungseinheit, d. h. lagerungseinheitseitig, angeordnet oder ausgebildet sein.

In einer Ausführungsform, in welcher die wenigstens eine Führungseinheit als Schwenkführung ausgebildet ist respektive eine solche ausbildet, kann sie wenigstens ein Schwenkelement umfassen, welches über wenigstens einen ersten Befestigungspunkt, dieser definiert typischerweise eine erste Schwenkachse, an einer Fahrzeugkarosserie eines mit der Klappeneinrichtung ausgestatteten Kraftfahrzeugs befestigbar oder befestigt ist, und über wenigstens einen zweiten Befestigungspunkt, dieser definiert typischerweise eine zweite Schwenkachse, an der zweiten Lagerungseinheit befestigbar oder befestigt ist. Die Schwenkführung kann dabei insbesondere als Parallelogrammführung ausgeführt sein.

Die zweite Lagerungseinheit ist zur Lagerung des Klappenbauteils eingerichtet und lagert das Klappenbauteil entsprechend. Das Klappenbauteil ist über eine entsprechend konfigurierte Lagerungseinrichtung sonach indirekt über die erste Lagerungseinheit und direkt über die zweite Lagerungseinheit gelagert.

Die zweite Lagerungseinheit ist insbesondere eingerichtet, dass Klappenbauteil zwischen einer ersten Lagerungsstellung und einer zweiten Lagerungsstellung bewegbar zu lagern. Dabei korreliert die erste Lagerungsstellung typischerweise mit der ersten Stellung des Klappenbauteils in der zweiten Bewegungsbahn. Die zweite Lagerungsstellung korreliert typischerweise mit der zweiten Stellung des Klappenbauteils in der zweiten Bewegungsbahn.

Die zweite Lagerungseinheit ist insbesondere eingerichtet, dass Klappenbauteil in einem Translationsbewegungsfreiheitsgrad zu lagern. Das Klappenbauteil kann vermittels der zweiten Lagerungseinheit sonach in einem Translationsbewegungsfreiheitsgrad bewegbar gelagert sein. Bewegungen des Klappenbauteils in dem Translationsbewegungsfreiheitsgrad resultieren typischerweise in Bewegungen des Klappenbauteils entlang der zweiten Bewegungsbahn.

Die zweite Lagerungseinheit kann durch wenigstens eine Führungseinheit gebildet sein oder wenigstens eine solche umfassen. Die wenigstens eine Führungseinheit kann als Translationsführung, insbesondere als Linearführung, ausgebildet sein. Die wenigstens eine Führungseinheit kann ein oder mehrere unter Ausbildung einer Translationsführung zusammenwirkende Führungselemente, wie z. B. Schiebeelemente oder profilartige bzw. -förmige Führungsstreben, umfassen. Jeweilige zusammenwirkende Führungselemente der wenigstens einen Führungseinheit können an der zweiten Lagerungseinheit, d. h. lagerungseinheitseitig, und an dem Klappenbauteil, d. h. klappenbauteilseitig, angeordnet oder ausgebildet sein. Typischerweise ist wenigstens ein erstes Führungselement lagerungseinheitseitig und wenigstens ein mit diesem zusammenwirkendes zweites Führungselement klappenbauteilseitig, angeordnet oder ausgebildet.

In einer Ausführungsform, in welcher die wenigstens eine Führungseinheit als Translationsführung, insbesondere als Linearführung, ausgebildet ist respektive eine solche ausbildet, kann die wenigstens eine Führungseinheit wenigstens ein über wenigstens einen ersten Befestigungspunkt an der ersten Lagerungseinheit befestigbares oder befestigtes erstes Führungselement und wenigstens ein über wenigstens einen zweiten Befestigungspunkt an dem Klappenbauteil befestigbares oder befestigtes, an oder in dem ersten Führungselement translatorisch, insbesondere linear, bewegbar geführtes, zweites Führungselement umfassen.

Für alle Ausführungsformen gilt, dass eine entsprechende Translationsführung beispielsweise als Teleskopführung ausgeführt sein kann.

Die Klappeneinrichtung kann grundsätzlich als Baugruppe zur Erstausrüstung eines Kraftfahrzeugs verbaubar bzw. vorgesehen sein. Denkbar ist es jedoch auch, dass die Klappeneinrichtung als Austausch- oder Nachrüstbaugruppe zum Austausch oder zur Nachrüstung in einer bestehenden Fahrzeugkarosserie eines Kraftfahrzeugs, d. h. insbesondere eines Omnibusses, verbaubar bzw. vorgesehen sein kann. Bei der Klappeneinrichtung kann es sich sonach um eine Austausch- oder Nachrichtrüstbaugruppe handeln, welche in einer bestehenden Fahrzeugkarosserie eines Kraftfahrzeugs, d. h. insbesondere in einer eine Zugangsmöglichkeit in einen fahrzeugkarosserieseitigen Innenraum bzw. Stau- oder Funktionsraum bildenden fahrzeugkarosserieseitigen Öffnung, verbaut werden kann.

Der Betrieb der Klappeneinrichtung, d. h. insbesondere der Betrieb der Bewegungseinrichtung sowie der dieser zugehörigen funktionellen Einrichtungen, ist über eine hardware- und/oder softwaremäßig implementierte Steuereinrichtung (nicht gezeigt) steuerbar. Die Klappeneinrichtung kann sonach eine Steuereinrichtung umfassen, welche zur Erzeugung von den Betrieb der Klappeneinrichtung respektive der Bewegungseinrichtung steuernden Steuerinformationen eingerichtet ist. Die Steuereinrichtung kommuniziert sonach mit jeweiligen funktionellen Einrichtungen der Bewegungseinrichtung, wie z. B. jeweiligen Antriebseinheiten, respektive deren Steuergeräten.

Für alle Ausführungsformen gilt ferner, dass das Klappenbauteil typischerweise als plattenartiges- bzw. -förmiges Formteil ausgebildet ist.

Weiterhin gilt für alle Ausführungsformen, dass das Klappenbauteil aus einem metallischen Werkstoff, d. h. insbesondere einem Leichtmetall, wie z. B. Aluminium, ausgebildet sein kann. Bei dem Klappenbauteil kann es sich konkret z. B. um ein Stanz- und/oder Biegeteil aus einem metallischen Werkstoff, d. h. insbesondere einem Leichtmetall, wie z. B. Aluminium, handeln. Jedoch kann das Klappenbauteil auch aus anderen Werkstoffen als metallischen Werkstoffen ausgebildet sein; beispielhaft sei in diesem Zusammenhang auf Kunststoffwerkstoffe verwiesen. Auch Ausführungen des Klappenbauteils aus Verbundwerkstoffen sind denkbar.

Schließlich gilt für alle Ausführungsformen, dass an oder in dem Klappenbauteil eine oder mehrere Funktionselemente, wie z. B. Betätigungselemente, Handhabungselemente, Schließelemente, Sichtelemente, Stabilisierungselemente, etc., angeordnet oder ausgebildet sein können.

Ein weiterer Aspekt der hierin beschriebenen Erfindung betrifft ein Kraftfahrzeug, d. h. insbesondere einen Auto- bzw. Omnibus. Das Kraftfahrzeug umfasst wenigstens eine Klappeneinrichtung gemäß dem ersten Aspekt der hierin beschriebenen Erfindung. Insbesondere umfasst das Kraftfahrzeug wenigstens eine eine Zugangsmöglichkeit in einen fahrzeugkarosserieseitigen Innenraum, insbesondere einen Stau- oder Funktionsraum, bildende fahrzeugkarosserieseitige Öffnung, sowie eine der fahrzeugkarosserieseitigen Öffnung zugeordnete Klappeneinrichtung gemäß dem ersten Aspekt der hierin beschriebenen Erfindung. Sämtliche Ausführungen im Zusammenhang mit der Klappeneinrichtung gelten sonach analog für das Kraftfahrzeug.

Die Erfindung ist anhand von Ausführungsbeispielen nochmals in den Zeichnungen erläutert. Dabei zeigt:
Fig. 1 eine Prinzipdarstellung einer Klappeneinrichtung gemäß einem Ausführungsbeispiel; und
Fig. 2 - 5 jeweils eine Prinzipdarstellung der in Fig. 1 gezeigten Klappeneinrichtung im Zuge einer Bewegung eines Klappenbauteils von der Offen- in die Schließstellung.

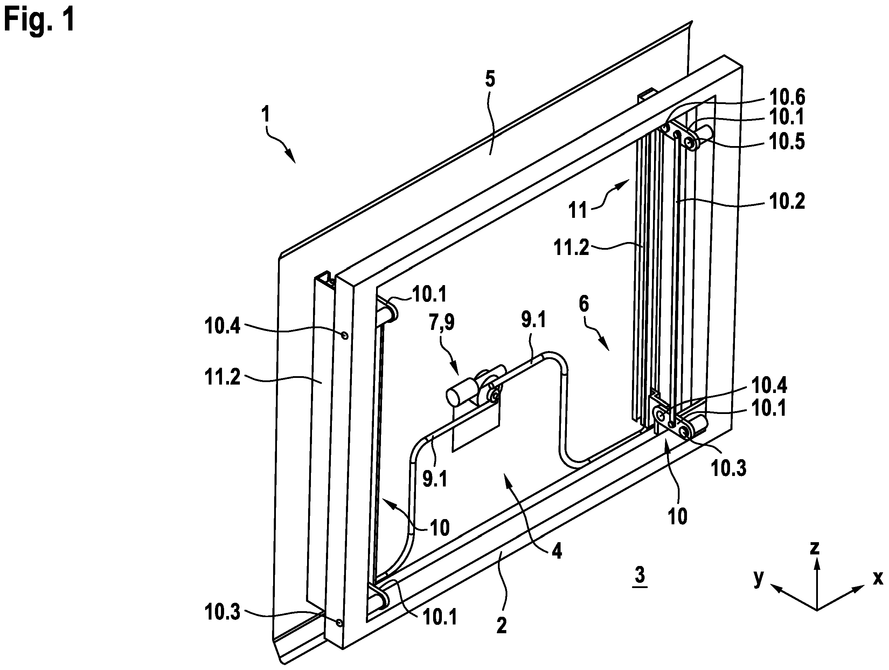

Fig. 1 zeigt eine Prinzipdarstellung einer Klappeneinrichtung 1 gemäß einem Ausführungsbeispiel in einer perspektivischen Ansicht. Die Blickrichtung auf die Klappeneinrichtung 1 entspricht - bezogen auf einen ordnungsgemäß in einer Fahrzeugkarosserie, welche in den Fig. nur durch das rahmenförmige bzw. -artige Bauteil 2 angedeutet ist, eines mit der Klappeneinrichtung 1 ausgestatteten Kraftfahrzeugs (nicht gezeigt) verbauten Zustand - einer Blickrichtung von innerhalb eines fahrzeugkarosserieseitigen Innenraums 3 nach außerhalb des Innenraums 3.

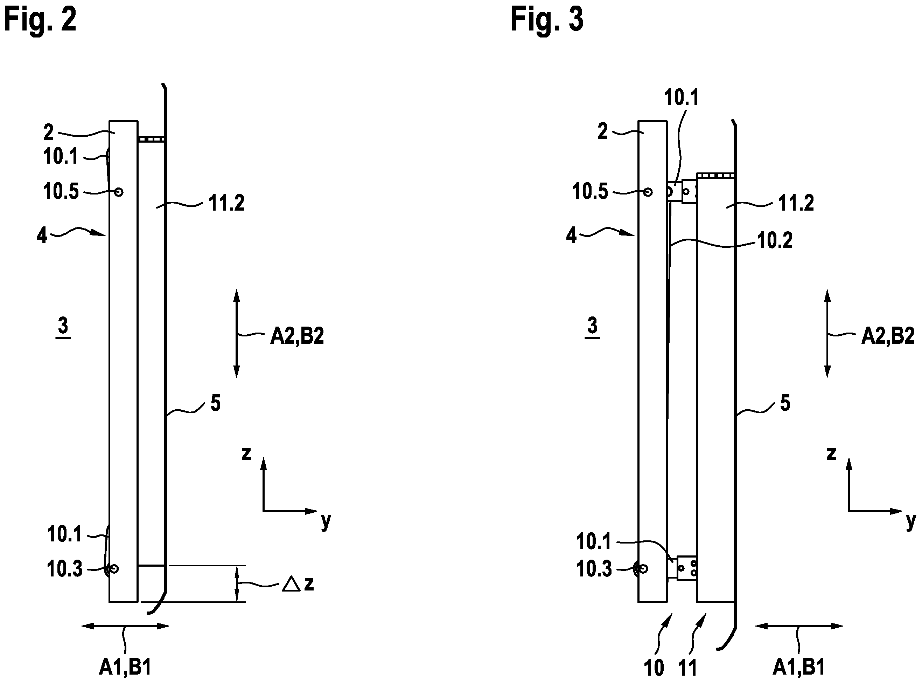

Die Fig. 2 - 5 zeigen jeweils eine Prinzipdarstellung der in Fig. 1 gezeigten Klappeneinrichtung 1 im Zuge einer Bewegung eines Klappenbauteils 5 von der Offenin die Schließstellung in einer seitlichen Ansicht. Die Blickrichtung auf die Klappeneinrichtung 1 entspricht - wiederum bezogen auf einen ordnungsgemäß in einer Fahrzeugkarosserie eines mit der Klappeneinrichtung 1 ausgestatteten Kraftfahrzeugs (nicht gezeigt) verbauten Zustand - einer Blickrichtung in Richtung einer Längs- oder Querachse des Kraftfahrzeugs.

Wenngleich die nachfolgenden Ausführungen sich auf den ordnungsgemäß in einer Fahrzeugkarosserie eines mit der Klappeinrichtung 1 ausgestatteten Kraftfahrzeugs verbauten Zustand der Klappeneinrichtung 1 beziehen, gelten diese unabhängig von einem entsprechenden in einer Fahrzeugkarosserie verbauten Zustand analog für die Klappeneinrichtung 1 als solche.

Die Klappeneinrichtung 1 ist zum Öffnen und Schließen wenigstens einer eine Zugangsmöglichkeit in einen fahrzeugkarosserieseitigen Innenraum 3, hierbei handelt es sich in dem in den Fig. gezeigten Ausführungsbeispiel um einen fahrzeugkarosserieseitigen Stauraum zum Verstauen von Objekten, d. h. z. B. Gepäck, oder eines Funktionsraums eines mit der Klappeneinrichtung 1 ausgestatteten Kraftfahrzeugs bildenden fahrzeugkarosserieseitigen Öffnung 4 eingerichtet. Bei dem Innenraum 3 handelt es sich um einen über die Öffnung 4 von außen, d. h. von außerhalb der Fahrzeugkarosserie, zugänglichen Raum. Der Innenraum 3 kann z. B. im Bereich des Hecks und/oder einer Seite und/oder der Front eines mit der Klappeneinrichtung 1 ausgestatteten Kraftfahrzeugs angeordnet oder ausgebildet sein.

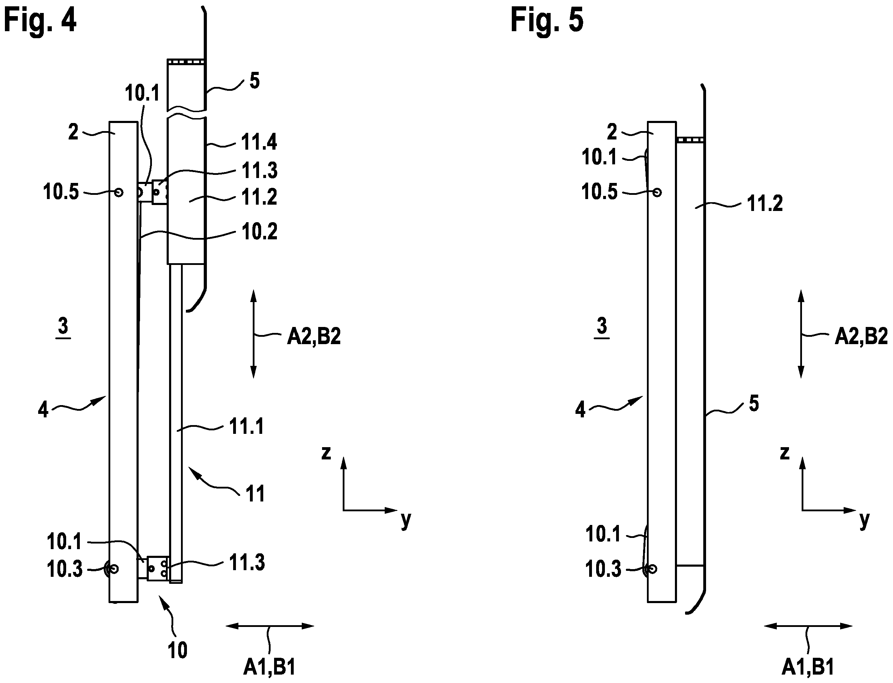

Zum Öffnen und Schließen der Öffnung 4 umfasst die Klappeneinrichtung 1 ein Klappenbauteil 5. Das Klappenbauteil 5 ist sonach im Allgemeinen in eine in Fig. 4 gezeigte Stellung (Offenstellung), in welcher es eine eine Zugangsmöglichkeit in einen entsprechenden Innenraum 3 bzw. in eine entsprechende Öffnung 4 freigibt, und in eine in den Fig. 1, 2 und 5 gezeigte Stellung (Schließstellung), in welcher es keine Zugangsmöglichkeit in einen entsprechenden fahrzeugkarosserieseitigen Innenraum 3 bzw. in eine entsprechende Öffnung 4 freigibt, bewegbar gelagert.

Das Klappenbauteil 5 ist zur Überführung von der Offen- in die Schließstellung, und umgekehrt, nicht verschwenkbar gelagert. Vielmehr ist das Klappenbauteil 5 - wie anhand der Fig. 2 - 5 ersichtlich - entlang einer durch eine erste Bewegungsachse A1 definierten ersten Bewegungsbahn B1 sowie entlang einer durch eine von der ersten Bewegungsachse A1 verschiedene zweite Bewegungsachse A2 definierten zweiten Bewegungsbahn B2 bewegbar gelagert. Durch die Lagerung des Klappenbauteils 5 in entsprechenden ersten und zweiten Bewegungsbahnen B1, B2 kann ein aus dem Stand der Technik bekanntes Verschwenken des Klappenbauteils 5 zur Überführung dieses von der Offen- in die Schließstellung, und umgekehrt, vermieden werden.

Bei den die jeweiligen Bewegungsbahnen B1, B2 definierenden Bewegungsachsen A1, A2 handelt es sich (im Wesentlichen) um Translationsachsen, d. h. insbesondere um Linearachsen. Die die erste Bewegungsbahn B1 definierende erste Bewegungsachse A1 ist sonach eine Translationsachse, d. h. insbesondere eine Linearachse. Gleichermaßen ist die die zweite Bewegungsbahn B2 definierende zweite Bewegungsachse A2 eine Translationsachse, d. h. insbesondere eine Linearachse.

Die Überführung des Klappenbauteils 5 von der Offen- in die Schließstellung, und umgekehrt, ist über Translations- bzw. Linearbewegungen des Klappenbauteils 5 entlang der Bewegungsbahnen B1, B2 realisiert, was im Vergleich deutlich weniger Platz beansprucht. Wie die Fig. 2 - 5 zeigen, können Bewegungen zur Überführung des Klappenbauteils 5 von der Offen- in die Schließstellung, und umgekehrt, nahe an einer Fahrzeugkarosserie, d. h. insbesondere nahe an einer, insbesondere seitlichen, Außenwandung einer Fahrzeugkarosserie, vollzogen werden, sodass das Klappenbauteil 5 wieder in der Offen- noch in der Schließstellung noch im Zuge einer Überführung von der Offen- in die Schließstellung viel Platz beansprucht.

Anhand der Fig. 2 - 5 ist ersichtlich, dass das Klappenbauteil 5 zur Überführung von der Offen- in die Schließstellung, und umgekehrt, in einem (im Wesentlichen) konstanten Abstand, d. h. insbesondere (im Wesentlichen) parallel, relativ zu einer, insbesondere seitlichen, Außenwandung einer Fahrzeugkarosserie bewegt werden kann. Der Abstand zwischen dem Klappenbauteil 5 und der, insbesondere seitlichen, Außenwandung einer Fahrzeugkarosserie während der Überführung des Klappenbauteils 5 von der Offen- in die Schließstellung, oder umgekehrt, kann z. B. in einem Bereich zwischen 1 und 30 cm, insbesondere in einem Bereich zwischen 1 und 20 cm, bevorzugt in einem Bereich zwischen 1 und 15 cm, liegen.
Das Klappenbauteil 5 kann aufgrund seiner Bewegung in entsprechenden Bewegungsbahnen B1, B2 auch als Schiebeklappe bezeichnet oder erachtet werden.

Anhand der Fig. 2 - 5 ist ersichtlich, dass die erste Bewegungsbahn B1 als eine Bewegungsbahn quer zu einer, insbesondere seitlichen, Außenwandung der Fahrzeugkarosserie und die zweite Bewegungsbahn B2 als eine Bewegungsbahn (im Wesentlichen) parallel zu einer, insbesondere seitlichen, Außenwandung der Fahrzeugkarosserie erachtet werden kann. Die erste Bewegungsachse A1 bzw. -bahn B1 kann in dem in den Fig. gezeigten Ausführungsbeispiel als eine in einer horizontalen Ebene liegende Bewegungsachse bzw. -bahn erachtet werden. Die zweite Bewegungsachse A2 bzw. -bahn B2 kann in dem in den Fig. gezeigten Ausführungsbeispiel sonach als eine in einer vertikalen Ebene liegende Bewegungsachse bzw. -bahn erachtet werden. Die zweite Bewegungsbahn B2 kann in dem in den Fig. gezeigten Ausführungsbeispiel daher als vertikale Bewegungsbahn erachtet werden.
Die Klappeneinrichtung 1 umfasst neben dem Klappenbauteil 5 auch eine dem Klappenbauteil 5 zugeordnete Bewegungseinrichtung 6. Die Bewegungseinrichtung 6 ist zur Bewegung des Klappenbauteils 5 entlang der ersten Bewegungsbahn B1 und entlang der zweiten Bewegungsbahn B2 eingerichtet. Die Bewegungseinrichtung 6 ist somit auch zur Überführung des Klappenbauteils 5 von der Offen- in die Schließstellung, und umgekehrt, eingerichtet.

Die Bewegungseinrichtung 6 kann mehrere dieser funktionell zuordenbare bzw. zugeordnete Einrichtungen umfassen, welche der Umsetzung von Bewegungen des Klappenbauteils 5 entlang der ersten Bewegungsbahn B1 und entlang der zweiten Bewegungsbahn B2 und somit auch zur Umsetzung von Bewegungen des Klappenbauteils 5 zur Überführung dieses von der Offen- in die Schließstellung, und umgekehrt, dienen. Wie sich im Weiteren ergibt, handelt es sich hierbei insbesondere um eine oder mehrere Antriebseinrichtungen 7 sowie eine oder mehrere Lagerungseinrichtungen 8.

Anhand der Fig. ist ersichtlich, dass eine Bewegung des Klappenbauteils 5 entlang der ersten Bewegungsbahn B1 eine Ausstellbewegung des Klappenbauteils 5 sein kann. Die erste Bewegungsbahn B1 kann sonach eine Ausstellbewegung des Klappenbauteils 5 definieren. Die Ausstellbewegung stellt eine Teilbewegung einer Gesamtbewegung zur Überführung des Klappenbauteils 5 von der Offen- in die Schließstellung, und umgekehrt, dar.

Die erste Bewegungsbahn B1 kann eine in den Fig. 1, 2 und 5 gezeigte erste Stellung und eine in Fig. 3 gezeigte zweite Stellung des Klappenbauteils 5 umfassen respektive durch eine in den Fig. 1, 2 und 5 gezeigte erste Stellung und eine in Fig. 3 gezeigte zweite Stellung des Klappenbauteils 5 definiert sein. Die erste Stellung des Klappenbauteils 5 in der ersten Bewegungsbahn B1 kann als eigentliche Schließstellung des Klappenbauteils 5 erachtet werden. Die zweite Stellung des Klappenbauteils 5 in der ersten Bewegungsbahn B1 kann als eine Zwischenstellung des Klappenbauteils 5 zwischen der Offenstellung und der Schließstellung erachtet werden.

Anhand der Fig. ist weiter ersichtlich, dass die erste Stellung des Klappenbauteils 5 in der ersten Bewegungsbahn B1 einer in die Fahrzeugkarosserie, d. h. insbesondere in die Öffnung 4, eingefahrenen Stellung des Klappenbauteils 5 entspricht respektive ist mit einer solchen korreliert. Die zweite Stellung des Klappenbauteils 5 in der ersten Bewegungsbahn B1 entspricht einer aus der Fahrzeugkarosserie, d. h. insbesondere aus der Öffnung 4, ausgefahrenen Stellung des Klappenbauteils 5 respektive ist mit einer solchen korreliert.

In der ersten Stellung ist das Klappenbauteil 5 innerhalb der eine Zugangsmöglichkeit in den Innenraum 3 bildenden Öffnung 4 respektive innerhalb der das Klappenbauteil 5 in der ersten Stellung aufnehmenden Öffnung 4 anordenbar oder angeordnet. Das Klappenbauteil 5 ist dabei bündig mit einer die Öffnung 4 begrenzenden, insbesondere seitlichen, Außenwandung der Fahrzeugkarosserie angeordnet (vgl. Fig. 2, 5). In der zweiten Stellung ist das Klappenbauteil 5 außerhalb der eine Zugangsmöglichkeit in den Innenraum bildenden Öffnung 4 respektive innerhalb der das Klappenbauteil 5 in der ersten Stellung aufnehmenden Öffnung 4 anordenbar oder angeordnet. Das Klappenbauteil 5 ist dabei beabstandet zu der die Öffnung 4 begrenzenden, insbesondere seitlichen, Außenwandung der Fahrzeugkarosserie angeordnet (vgl. Fig. 3).

Wie sich im Weiteren ergibt, korreliert die zweite Stellung des Klappenbauteils 5 in der ersten Bewegungsbahn B1 mit einer ersten Stellung des Klappenbauteils 5 in der zweiten Bewegungsbahn B2.

Anhand der Fig. ist weiter ersichtlich, dass die Bewegung des Klappenbauteils 5 entlang der zweiten Bewegungsbahn B2 eine vertikale Hubbewegung (z-Bewegung) des Klappenbauteils 5 ist. Die zweite Bewegungsbahn B2 definiert sonach eine vertikale Hubbewegung des Klappenbauteils 5. Die Hubbewegung stellt ebenso eine Teilbewegung einer Gesamtbewegung zur Überführung des Klappenbauteils 5 von der Offen- in die Schließstellung, und umgekehrt, dar.

Die zweite Bewegungsbahn B2 kann eine in Fig. 3 gezeigte erste Stellung und eine in Fig. 4 gezeigte zweite Stellung des Klappenbauteils 5 umfassen respektive durch eine in Fig. 3 gezeigte erste Stellung und eine in Fig. 4 gezeigte zweite Stellung des Klappenbauteils 5 definiert sein. Die erste Stellung des Klappenbauteils 5 in der zweiten Bewegungsbahn B2 kann als eine Zwischenstellung des Klappenbauteils 5 zwischen der Offenstellung und der Schließstellung des Klappenbauteils 5 erachtet werden. Die zweite Stellung des Klappenbauteils 5 in der zweiten Bewegungsbahn B2 kann als eigentliche Offenstellung des Klappenbauteils 5 erachtet werden.

Anhand von Fig. 3 ist ersichtlich, dass das Klappenbauteil 5 in der ersten Stellung der zweiten Bewegungsbahn B2 mit der Öffnung 4 fluchtet. Das Klappenbauteil 5 ist in der ersten Stellung der zweiten Bewegungsbahn B2 sonach derart relativ zu der Öffnung 4 angeordnet, dass es mit der Öffnung 4 fluchtet; das Klappenbauteil 5 ist in der ersten Stellung versetzt zu der Öffnung 4 angeordnet, wobei es die Öffnung 4 überdeckt und so eine Zugangsmöglichkeit in den Innenraum 3 nicht freigibt.

Anhand von Fig. 4 ist ersichtlich, dass das Klappenbauteil 5 in der zweiten Stellung der zweiten Bewegungsbahn B2 nicht mit der Öffnung 4 fluchtet. Das Klappenbauteil 5 ist in der zweiten Stellung der zweiten Bewegungsbahn B2 sonach derart relativ zu der Öffnung 4 angeordnet, dass es nicht mit der Öffnung 4 fluchtet; das Klappenbauteil 5 ist in der zweiten Stellung der zweiten Bewegungsbahn B2 sonach versetzt zu der Öffnung 4 angeordnet, wobei es die Öffnung 4 nicht überdeckt und so eine Zugangsmöglichkeit in den Innenraum 3 freigibt.

Anhand der Fig. 2 - 5 ist ersichtlich, dass das Klappenbauteil 5 jedenfalls bei einer Bewegung entlang der zweiten Bewegungsbahn B2, d. h. insbesondere bei einer Bewegung von der ersten Stellung der zweiten Bewegungsbahn B2 in die zweite Stellung der zweiten Bewegungsbahn B2, und umgekehrt, keine Schwenkbewegung vollzieht.

Wie erwähnt, kann die Bewegungseinrichtung 6 eine oder mehrere funktionelle Einrichtungen umfassen, welche der Umsetzung von Bewegungen des Klappenbauteils 5 entlang der ersten Bewegungsbahn B1 und entlang der zweiten Bewegungsbahn B2 und somit auch zur Umsetzung von Bewegungen des Klappenbauteils 5 zur Überführung dieses von der Offen- in die Schließstellung, und umgekehrt, dienen.

Die Bewegungseinrichtung 6 kann z. B. eine Antriebseinrichtung 7 umfassen. Die Antriebseinrichtung 7 umfasst in dem in den Fig. gezeigten Ausführungsbeispiel eine Antriebseinheit 9, welche eingerichtet ist, eine das Klappenbauteil 5 in eine Bewegung entlang der ersten Bewegungsbahn B1 und entlang der zweiten Bewegungsbahn B2 versetzende Antriebskraft oder ein entsprechendes Antriebsmoment zu erzeugen. Mithin kann die für Bewegungen des Klappenbauteils 5 entlang der ersten und der zweiten Bewegungsbahn B1, B2 erforderliche Antriebskraft oder ein entsprechendes Antriebsmoment über eine (einzige) Antriebseinheit 9 erzeugbar respektive bereitgestellt ist. Alternativ ist es denkbar, dass die Antriebseinrichtung 7 eine erste Antriebseinrichtung 9 umfasst, welche eingerichtet ist, eine das Klappenbauteil 5 in eine Bewegung entlang der ersten Bewegungsbahn B1 versetzende Antriebskraft oder ein entsprechendes Antriebsmoment zu erzeugen, und eine zweite Antriebseinrichtung (nicht gezeigt) umfasst, welche eingerichtet ist, eine das Klappenbauteil 5 in eine Bewegung entlang der zweiten Bewegungsbahn B2 versetzende Antriebskraft oder ein entsprechendes Antriebsmoment zu erzeugen. Mithin ist es denkbar, dass die für Bewegungen des Klappenbauteils 5 entlang der ersten und der zweiten Bewegungsbahn B1, B2 erforderliche Antriebskraft oder ein entsprechendes Antriebsmoment über mehrere Antriebseinheiten 9 erzeugbar respektive bereitgestellt ist. Eine entsprechende Antriebseinheit 9 kann in allen Ausführungsbeispielen als (elektro)motorische Antriebseinheit ausgebildet sein. Alternativ oder ergänzend sind auch anders konfigurierte Antriebseinheiten 9, wie z. B. hydraulische oder pneumatische Antriebseinheiten, denkbar.

In Fig. 1 ist beispielhaft gezeigt, dass die Antriebseinrichtung 7 oder wenigstens eine der Antriebseinrichtung 7 zugehörige Antriebseinheit 9 (direkt) an dem Klappenbauteil 5 angeordnet oder ausgebildet sein kann. Die Antriebseinrichtung 7 oder wenigstens eine der Antriebseinrichtung 7 zugehörige Antriebseinheit 9 kann sonach (direkt) in das Klappenbauteil 5 integriert sein. Das Klappenbauteil 5 stellt hier eine hochintegriert ausgeführte Baugruppe dar.

Die Antriebseinheit 9 ist in dem in den Fig. gezeigten Ausführungsbeispiel über Kraftübertragungselemente 9.1, d. h. z. B. Zug- und/oder Schubelemente, wie z. B. Zug- und/oder Schubstangen, mit dem zu bewegenden Klappenbauteil 5 gekoppelt, sodass sich entsprechende Antriebskräfte bzw. -momente auf das Klappenbauteil 5 übertragen lassen, um das Klappenbauteil 5 in die oder in Richtung der Offen- oder Schließstellung ,oder umgekehrt, zu bewegen.

Alternativ kann die Antriebseinrichtung 7 oder wenigstens eine der Antriebseinrichtung 7 zugehörige Antriebseinheit 9 an der Fahrzeugkarosserie angeordnet oder ausgebildet sein. Die Antriebseinrichtung 7 oder wenigstens eine der Antriebseinrichtung 7 zugehörige Antriebseinheit 9 kann sonach in eine Fahrzeugkarosserie integriert sein. Das Klappenbauteil 5 kann hier eine vergleichsweise einfach ausgeführte Baugruppe darstellen.

Selbstverständlich sind auch Mischformen denkbar; mithin kann wenigstens eine Antriebseinheit 9 an dem Klappenbauteil 5 angeordnet oder ausgebildet und wenigstens eine weitere Antriebseinheit 9 an einer Fahrzeugkarosserie angeordnet oder ausgebildet sein. In dieser Variante ist es insbesondere denkbar, dass eine fahrzeugkarosserieseitige angeordnete oder ausgebildete Antriebseinheit 9 zur Erzeugung einer das Klappenbauteil 5 in eine Bewegung entlang der ersten Bewegungsbahn B1 versetzenden Antriebskraft oder eines entsprechenden Antriebsmoments eingerichtet ist, und eine klappenbauteilseitig angeordnete oder ausgebildete Antriebseinheit 9 zur Erzeugung einer das Klappenbauteil 5 in eine Bewegung entlang der zweiten Bewegungsbahn B2 versetzenden Antriebskraft oder eines entsprechenden Antriebsmoments eingerichtet ist. Prinzipiell ist eine umgekehrte Konfiguration ebenso denkbar.

Die Bewegungseinrichtung 6 kann weiterhin eine Lagerungseinrichtung 8 zur bewegbaren Lagerung des Klappenbauteils 5 umfassen. Die Lagerungseinrichtung 8 umfasst in dem in den Fig. gezeigten Ausführungsbeispiel beispielhaft eine erste Lagerungseinheit 10 und eine zweite Lagerungseinheit 11. Die erste Lagerungseinheit 10 ist zur Lagerung der zweiten Lagerungseinheit 11 eingerichtet und lagert die zweite Lagerungseinheit 11 entsprechend. Die erste Lagerungseinheit 10 ist insbesondere eingerichtet, die zweite Lagerungseinheit 11 zwischen einer in den Fig. 1, 2 und 5 gezeigten ersten Lagerungsstellung und einer in Fig. 3 gezeigten zweiten Lagerungsstellung bewegbar zu lagern. Ersichtlich korreliert die erste Lagerungsstellung mit der ersten Stellung des Klappenbauteils 5 in der ersten Bewegungsbahn B1 und die zweite Lagerungsstellung mit der zweiten Stellung des Klappenbauteils 5 in der ersten Bewegungsbahn B1.

Die erste Lagerungseinheit 10 ist in dem in den Fig. gezeigten Ausführungsbeispiel eingerichtet, die zweite Lagerungseinheit 11 in einem Schwenkbewegungsfreiheitsgrad zu lagern. Bewegungen der zweiten Lagerungseinheit 11 in dem Schwenkbewegungsfreiheitsgrad resultieren dabei in Bewegungen des Klappenbauteils 5 entlang der ersten Bewegungsbahn B1.

Anhand von Fig. 1 ist ersichtlich, dass die erste Lagerungseinheit 10 durch eine erste und eine zweite Führungseinheit gebildet ist.

Die Führungseinheit der ersten Lagerungseinheit 10 sind in dem in den Fig. gezeigten Ausführungsbeispiel jeweils als Schwenkführungen ausgebildet und umfassen jeweils mehrere unter Ausbildung einer Schwenkführung zusammenwirkende Führungselemente 10.1. Die Führungselemente 10.1 sind in dem in den Fig. gezeigten Ausführungsbeispiel als Schwenkelemente ausgebildet. Ersichtlich sind die Führungselemente 10.1 einerseits an der Fahrzeugkarossiere, d. h. fahrzeugkarosserieseitig, und andererseits an der zweiten Lagerungseinheit 11, d. h. lagerungseinheitseitig, angeordnet.

Anhand von Fig. 1 ist ersichtlich, dass ein erstes Führungs- bzw. Schwenkelement 10.1 einer entsprechenden Führungseinheit über einen ersten Befestigungspunkt 10.3, dieser kann z. B. als Schwenkbolzen ausgeführt sein und eine Schwenkachse definieren, an der Fahrzeugkarosserie befestigt ist, und über einen zweiten Befestigungspunkt 10.4, dieser kann z. B. ebenso als Schwenkbolzen ausgeführt sein und eine Schwenkachse definieren, an der zweiten Lagerungseinheit 11 befestigt ist.

Fig. 1 zeigt weiterhin, dass ein zweites Führungs- bzw. Schwenkelement 10.1 einer entsprechenden Führungseinheit über einen ersten Befestigungspunkt 10.5, dieser kann z. B. als Schwenkbolzen ausgeführt sein und eine Schwenkachse definieren, an der Fahrzeugkarosserie befestigt ist, und über einen zweiten Befestigungspunkt 10.6, dieser kann z. B. ebenso als Schwenkbolzen ausgeführt sein und eine Schwenkachse definieren, an der zweiten Lagerungseinheit 11 befestigt ist.

Ersichtlich sind die Führungs- bzw. Schwenkelemente 10.1 einer entsprechenden Führungseinheit in dem in den Fig. gezeigten Ausführungsbeispiel über ein diese koppelndes Kopplungselement 10.2, dieses kann z. B. als Kopplungsstange ausgebildet sein, miteinander bewegungsgekoppelt. Die durch eine entsprechende Führungseinheit realisierte Schwenkführung ist in dem in den Fig. gezeigten Ausführungsbeispiel sonach beispielhaft als Parallelogrammführung ausgeführt.

Die Ansicht gemäß Fig. 1 zeigt, dass eine entsprechende über die erste Lagerungseinheit 10 realisierte Parallelogrammführung mehrfach vorhanden sein kann. Die Führungseinheiten der ersten Lagerungseinheit 10 sind funktionell identisch ausgebildet; die in der Fig. in dem rechten Bereich des Klappenbauteils 5 angeordnete Führungseinheit ist analog zu der in der Fig. in dem linken Bereich des Klappenbauteils 5 angeordneten Führungseinheit ausgebildet.

Aus der in den Fig. gezeigten Ausgestaltung der ersten Lagerungseinheit 10 ergibt sich, dass die erste Bewegungsbahn B1 in dem in den Fig. gezeigten Ausführungsbeispiel eine überlagerte Bewegung des Klappenbauteils 5 in wenigstens zwei unterschiedlichen Bewegungsbahnkomponente, d. h. z. B. einer horizontalen und einer vertikalen Bewegungsbahnkomponente, sein kann. Hieraus kann - wie in Fig. 2 beispielhaft angedeutet - ein (im Vergleich geringfügiger) Hub Δz des Klappenbauteils 5, insbesondere in Richtung eines Untergrunds, bei einer Bewegung entlang der ersten Bewegungsbahn B1, d. h. insbesondere bei einer Bewegung des Klappenbauteils 5 von der ersten Stellung der ersten Bewegungsbahn B1 in die zweite Stellung der ersten Bewegungsbahn B1, resultieren. Ein entsprechender Hub kann z. B. zweckmäßig sein, um ungewünschte Kontakte des Klappenbauteils 5 mit der Fahrzeugkarosserie bei Bewegungen des Klappenbauteils 5 entlang der ersten Bewegungsbahn B1 zu vermeiden.

Die zweite Lagerungseinheit 11 ist zur Lagerung des Klappenbauteils 5 eingerichtet und lagert das Klappenbauteil 5 entsprechend. Das Klappenbauteil 5 ist in der in dem in den Fig. gezeigten Ausführungsbeispiel gezeigten beispielhaften Konfiguration sonach indirekt über die erste Lagerungseinheit 10 und direkt über die zweite Lagerungseinheit 11 gelagert.

Die zweite Lagerungseinheit 11 ist eingerichtet, dass Klappenbauteil 5 zwischen einer in Fig. 3 gezeigten ersten Lagerungsstellung und einer in Fig. 4 gezeigten zweiten Lagerungsstellung bewegbar zu lagern. Ersichtlich korreliert die erste Lagerungsstellung mit der ersten Stellung des Klappenbauteils 5 in der zweiten Bewegungsbahn B2 und die zweite Lagerungsstellung mit der zweiten Stellung des Klappenbauteils 5 in der zweiten Bewegungsbahn B2.

Die zweite Lagerungseinheit 11 ist sonach eingerichtet, dass Klappenbauteil 5 in einem Translationsbewegungsfreiheitsgrad zu lagern. Das Klappenbauteil 5 ist vermittels der zweiten Lagerungseinheit 11 sonach in einem Translationsbewegungsfreiheitsgrad bewegbar gelagert. Bewegungen des Klappenbauteils 5 in dem Translationsbewegungsfreiheitsgrad resultieren in Bewegungen des Klappenbauteils 5 entlang der zweiten Bewegungsbahn B2.

Anhand von Fig. 1 ist ersichtlich, dass die zweite Lagerungseinheit 11 durch eine erste und eine zweite Führungseinheit gebildet ist.

Die Führungseinheiten der zweiten Lagerungseinheit 11 sind in dem in den Fig. gezeigten Ausführungsbeispiel jeweils als Translationsführungen, insbesondere als Linearführungen, ausgebildet und umfassen jeweils mehrere unter Ausbildung einer Translationsführung zusammenwirkende Führungselemente. Die Führungselemente sind in dem in den Fig. gezeigten Ausführungsbeispiel als profilartige bzw. -förmige Führungsstreben 11.1, 11.2 ausgebildet. Ersichtlich sind die Führungsstreben 11.1, 11.2 einerseits an der ersten Lagerungseinheit 10, d. h. lagerungseinheitseitig, und andererseits an dem Klappenbauteil 5, d. h. klappenbauteilseitig, angeordnet.

Anhand von Fig. 4 ist ersichtlich, dass eine erste Führungsstrebe 11.1 einer entsprechenden Führungseinheit über wenigstens einen ersten und einen zweiten Befestigungspunkt 11.3 an der ersten Lagerungseinheit 10 befestigt sein kann, und eine zweite Führungsstrebe 11.2 einer entsprechenden Führungseinheit über wenigstens einen zweiten Befestigungspunkt 11.4 an dem Klappenbauteil 5 befestigt sein kann. Die zweite Führungsstrebe 11.2 ist an oder in der ersten Führungsstrebe 11.1 translatorisch, insbesondere linear, bewegbar geführt.

Die Ansicht gemäß Fig. 1 zeigt, dass eine entsprechende über die zweite Lagerungseinheit 11 realisierte Translationsführung mehrfach vorhanden sein kann. Die Führungseinheiten der zweiten Lagerungseinheit 11 sind funktionell identisch ausgebildet; die in der Fig. in dem rechten Bereich des Klappenbauteils 5 angeordnete Führungseinheit ist analog zu der in der Fig. in dem linken Bereich des Klappenbauteils 5 angeordneten Führungseinheit ausgebildet.

Die Klappeneinrichtung 1 kann als Baugruppe zur Erstausrüstung eines Kraftfahrzeugs vorgesehen sein. Die Klappeneinrichtung 1 kann jedoch auch als Austausch- oder Nachrüstbaugruppe zum Austausch oder zur Nachrüstung in einer bestehenden Fahrzeugkarosserie eines Kraftfahrzeugs, d. h. insbesondere eines Omnibusses, verbaubar sein. Bei der Klappeneinrichtung 1 kann es sich sonach um eine Austausch- oder Nachrichtrüstbaugruppe handeln, welche in einer bestehenden Fahrzeugkarosserie eines Kraftfahrzeugs, d. h. insbesondere in einer eine Zugangsmöglichkeit in einen fahrzeugkarosserieseitigen Innenraum 3 bzw. Stau- oder Funktionsraum bildenden fahrzeugkarosserieseitigen Öffnung 4, verbaut werden kann.

Der Betrieb der Klappeneinrichtung 1, d. h. insbesondere der Betrieb der Bewegungseinrichtung 6 sowie der dieser zugehörigen funktionellen Einrichtungen, ist über eine hardware- und/oder softwaremäßig implementierte Steuereinrichtung (nicht gezeigt) steuerbar. Die Steuereinrichtung ist sonach zur Erzeugung von den Betrieb der Klappeneinrichtung 1 respektive der Bewegungseinrichtung 6 steuernden Steuerinformationen eingerichtet. Die Steuereinrichtung kommuniziert sonach mit jeweiligen funktionellen Einrichtungen der Bewegungseinrichtung 6, wie z. B. jeweiligen Antriebseinheiten 9, respektive deren Steuergeräten.

In den Fig. 2 - 5 ist beispielhaft gezeigt, dass das Klappenbauteil 5 - insbesondere bezogen auf eine Haupterstreckungsebene des in dem in den Fig. gezeigten Ausführungsbeispiel beispielhaft plattenartig- bzw. -förmig ausgebildeten Klappenbauteils 5 - im Zuge einer Bewegung entlang der zweiten Bewegungsbahn B2 (im Wesentlichen) parallel zu einer, insbesondere seitlichen, Außenwandung der Fahrzeugkarosserie ausgerichtet sein kann. Wenngleich in den Fig. nicht gezeigt, ist jedoch auch eine winklig (geringfügig) geneigte Ausrichtung des Klappenbauteils 5 relativ zu einer, insbesondere seitlichen, Außenwandung einer Fahrzeugkarosserie möglich. In diesem Zusammenhang ist beispielsweise eine Kulissenführung des Klappenbauteils 5 denkbar; eine solche Kulissenführung kann beispielsweise zur Führung eines unteren Abschnitts des Klappenbauteils 5 dienen.

Das Klappenbauteil 5 ist, wie erwähnt, typischerweise als plattenartiges- bzw. -förmiges Formteil ausgebildet.

Das Klappenbauteil 5 kann aus einem metallischen Werkstoff, d. h. insbesondere einem Leichtmetall, wie z. B. Aluminium, ausgebildet sein. Bei dem Klappenbauteil 5 kann es sich konkret z. B. um ein Stanz- und/oder Biegeteil aus einem metallischen Werkstoff, d. h. insbesondere einem Leichtmetall, wie z. B. Aluminium, handeln. Jedoch kann das Klappenbauteil 5 auch aus anderen Werkstoffen als metallischen Werkstoffen ausgebildet sein; beispielhaft sei in diesem Zusammenhang auf Kunststoffwerkstoffe verwiesen. Auch Ausführungen des Klappenbauteil 5 aus Verbundwerkstoffen sind denkbar.

An oder in dem Klappenbauteil 5 können eine oder mehrere Funktionselemente, wie z. B. Betätigungselemente, Handhabungselemente, Schließelemente, Sichtelemente, Stabilisierungselemente, etc., angeordnet oder ausgebildet sein.

## Patentansprüche

1. Klappeneinrichtung (1) für ein Kraftfahrzeug, insbesondere für einen Omnibus, wobei die Klappeneinrichtung (1) zum Öffnen und Schließen wenigstens einer eine Zugangsmöglichkeit in einen fahrzeugkarosserieseitigen Innenraum (3), insbesondere in einen fahrzeugkarosserieseitigen Stau- oder Funktionsraum, eingerichtet ist, **gekennzeichnet durch:**
- ein Klappenbauteil (5), welches entlang einer durch eine erste Bewegungsachse (A1) definierten ersten Bewegungsbahn (B1) sowie entlang einer durch eine von der ersten Bewegungsachse (A1) verschiedene zweite Bewegungsachse (A2) definierten zweiten Bewegungsbahn (B2) bewegbar gelagert ist,
- eine dem Klappenbauteil (5) zugeordnete Bewegungseinrichtung, welche (6) zur Bewegung des Klappenbauteils (5) entlang der ersten Bewegungsbahn (B1) und entlang der zweiten Bewegungsbahn (B2) eingerichtet ist.

2. Klappeneinrichtung nach Anspruch 1, **dadurch gekennzeichnet, dass** die erste Bewegungsachse (A1) eine Translationsachse, insbesondere eine Linearachse, und die zweite Bewegungsachse (A2) eine Translationsachse, insbesondere eine Linearachse, ist.

3. Klappeneinrichtung nach einem der vorhergehenden Ansprüche, **dadurch gekennzeichnet, dass** eine Bewegung des Klappenbauteils (5) entlang der ersten Bewegungsbahn (B1) eine Ausstellbewegung des Klappenbauteils (5) ist, insbesondere eine Ausstellbewegung relativ zu einer Fahrzeugkarosserie eines mit der Klappeneinrichtung (1) ausgestatteten Kraftfahrzeugs.

4. Klappeneinrichtung nach Anspruch 3, **dadurch gekennzeichnet, dass** die erste Bewegungsbahn (B1) eine erste Stellung und eine zweite Stellung des Klappenbauteils (5) umfasst, wobei die erste Stellung in einem ordnungsgemäß in einer Fahrzeugkarosserie eines mit der Klappeneinrichtung (1) ausgestatteten Kraftfahrzeugs verbauten Zustand der Klappeneinrichtung (1) einer in die Fahrzeugkarosserie eingefahrenen Stellung des Klappenbauteils (5) und die zweite Stellung in einem ordnungsgemäß in einer Fahrzeugkarosserie eines mit der Klappeneinrichtung (1) ausgestatteten Kraftfahrzeugs verbauten Zustand der Klappeneinrichtung (1) einer aus der Fahrzeugkarosserie ausgefahrenen Stellung des Klappenbauteils (5) entspricht.

5. Klappeneinrichtung nach Anspruch 4, **dadurch gekennzeichnet, dass** das Klappenbauteil (5) in der ersten Stellung innerhalb einer das Klappenbauteil (5) aufnehmenden fahrzeugkarosserieseitigen Öffnung (4) anordenbar oder angeordnet ist, wobei es bündig mit einer die fahrzeugkarosserieseitige Öffnung (4) begrenzenden, insbesondere seitlichen, Außenwandung der Fahrzeugkarosserie anordenbar oder angeordnet ist, und
in der zweiten Stellung außerhalb einer das Klappenbauteil (5) in der ersten Stellung aufnehmenden fahrzeugkarosserieseitigen Öffnung (4) anordenbar oder angeordnet ist, wobei es beabstandet zu einer die fahrzeugkarosserieseitige Öffnung (4) begrenzenden, insbesondere seitlichen, Außenwandung der Fahrzeugkarosserie anordenbar oder angeordnet ist.

6. Klappeneinrichtung nach einem der vorhergehenden Ansprüche, **dadurch gekennzeichnet, dass** eine Bewegung des Klappenbauteils (5) entlang der zweiten Bewegungsbahn (B2) eine Hubbewegung des Klappenbauteils (5) ist, insbesondere eine Hubbewegung relativ zu einer Fahrzeugkarosserie eines mit der Klappeneinrichtung (1) ausgestatteten Kraftfahrzeugs.

7. Klappeneinrichtung nach Anspruch 6, **dadurch gekennzeichnet, dass** die zweite Bewegungsbahn (B2) eine erste und eine zweite Stellung des Klappenbauteils (5) umfasst, wobei die erste Stellung in einem ordnungsgemäß in einer Fahrzeugkarosserie eines mit der Klappeneinrichtung (1) ausgestatteten Kraftfahrzeugs mit einer das Klappenbauteil (5) in der oder einer ersten Stellung des Klappenbauteils (5) in der ersten Bewegungsbahn (B1) aufnehmenden fahrzeugkarosserieseitigen Öffnung (4) fluchtet, und
die zweite Stellung in einem ordnungsgemäß in einer Fahrzeugkarosserie eines mit der Klappeneinrichtung (1) ausgestatteten Kraftfahrzeugs nicht mit einer das Klappenbauteil (5) in der oder einer ersten Stellung des Klappenbauteils (5) in der ersten Bewegungsbahn (B1) aufnehmenden fahrzeugkarosserieseitigen Öffnung (4) fluchtet.

8. Klappeneinrichtung nach einem der vorhergehenden Ansprüche, **dadurch gekennzeichnet, dass die** Bewegungseinrichtung (6) eine Antriebseinrichtung (7) umfasst, wobei die Antriebseinrichtung (7)
wenigstens eine Antriebseinheit (9) umfasst, welche eingerichtet ist, eine das Klappenbauteil (5) in eine Bewegung entlang der ersten Bewegungsbahn (B1) und entlang der zweiten Bewegungsbahn (B2) versetzende Antriebskraft zu erzeugen, oder
wenigstens eine erste Antriebseinheit (9) umfasst, welche eingerichtet ist, eine das Klappenbauteil (5) in eine Bewegung entlang der ersten Bewegungsbahn (B1) versetzende Antriebskraft zu erzeugen, und
wenigstens eine zweite Antriebseinheit (9) umfasst, welche eingerichtet ist, eine das Klappenbauteil (5) in eine Bewegung entlang der zweiten Bewegungsbahn (B2) versetzende Antriebskraft zu erzeugen.

9. Klappeneinrichtung nach Anspruch 8, **dadurch gekennzeichnet, dass** die Antriebseinrichtung (7) oder wenigstens eine der Antriebseinrichtung (7) zugehörige Antriebseinheit (9) an dem Klappenbauteil (5) angeordnet oder ausgebildet ist, oder die Antriebseinrichtung (7) oder wenigstens eine der Antriebseinrichtung (7) zugehörige Antriebseinheit (9) in einem ordnungsgemäß in einer Fahrzeugkarosserie eines mit der Klappeneinrichtung (1) ausgestatteten Kraftfahrzeugs verbauten Zustand der Klappeneinrichtung (1) an der Fahrzeugkarosserie oder einem mit der Fahrzeugkarosserie verbundenen Bauteil angeordnet oder ausgebildet ist.

10. Klappeneinrichtung nach einem der vorhergehenden Ansprüche, **dadurch gekennzeichnet, dass** die Bewegungseinrichtung (6) eine Lagereinrichtung zur bewegbaren Lagerung des Klappenbauteils (5) umfasst, wobei die Lagereinrichtung eine erste Lagerungseinheit (10) welche zur bewegbaren Lagerung einer zweiten Lagerungseinheit (11) eingerichtet ist, und eine zweite Lagerungseinheit (11), welche zur bewegbaren Lagerung des Klappenbauteils (5) eingerichtet ist, umfasst.

11. Klappeneinrichtung nach Anspruch 10, **dadurch gekennzeichnet, dass** die erste Lagerungseinheit (10) eingerichtet ist, die zweite Lagerungseinheit (11) in einem Schwenkbewegungs- oder einem Translationsbewegungsfreiheitsgrad zu lagern, und die zweite Lagerungseinheit (11) eingerichtet ist, dass Klappenbauteil (5) in einem Translationsbewegungsfreiheitsgrad zu lagern.

12. Klappeneinrichtung nach Anspruch 10 oder 11, **dadurch gekennzeichnet, dass** die erste Lagerungseinheit (10) durch wenigstens eine Führungseinheit gebildet ist oder eine solche umfasst, wobei die wenigstens eine Führungseinheit als Schwenk- oder Translationsführung ausgebildet ist, und die zweite Lagerungseinheit (11) durch wenigstens eine Führungseinheit gebildet ist oder eine solche umfasst, wobei die wenigstens eine Führungseinheit als Translationsführung, insbesondere als Linearführung, ausgebildet ist.

13. Klappeneinrichtung nach Anspruch 12, **dadurch gekennzeichnet, dass** die wenigstens eine Führungseinheit der ersten Lagerungseinheit (10) als Schwenkführung ausgebildet ist, wobei sie wenigstens ein über wenigstens einen ersten Befestigungspunkt (10.3, 10.5) an einer Fahrzeugkarosserie eines mit der Klappeneinrichtung (1) ausgestatteten Kraftfahrzeugs befestigbares oder befestigtes und über wenigstens einen zweiten Befestigungspunkt (10.4, 10.6) an der zweiten Lagerungseinheit (11) befestigbares oder befestigtes Schwenkelement umfasst.

14. Klappeneinrichtung nach Anspruch 12 oder 13, **dadurch gekennzeichnet, dass** die wenigstens eine Führungseinheit der zweiten Lagerungseinheit (11) als Translationsführung, insbesondere als Linearführung, ausgebildet ist, wobei sie wenigstens ein über wenigstens einen ersten Befestigungspunkt (11.3) an der wenigstens einen Führungseinheit der ersten Lagerungseinheit (10) befestigbares oder befestigtes erstes Führungselement und wenigstens ein über wenigstens einen zweiten Befestigungspunkt (11.4) an dem Klappenbauteil (5) befestigbares oder befestigtes, an oder in dem ersten Führungselement translatorisch, insbesondere linear, bewegbar geführtes, zweites Führungselement umfasst.

15. Klappeneinrichtung nach einem der vorhergehenden Ansprüche, **dadurch gekennzeichnet, dass** sie als Austausch- oder Nachrüstbaugruppe zum Austausch oder zur Nachrüstung in einer Fahrzeugkarosserie eines Kraftfahrzeugs verbaubar ist.
